# EUROPEAN PATENT APPLICATION

(11) **EP 1 339 191 A2**
(43) Date of publication of application: **27.08.2003**
(21) Application number: 03003677.6
(22) Date of filing: 18.02.2003
(51) Int. Cl.: H04L 12/28, H04L 12/24

(54) **Connected Home Network Console**

(30) Priority: 21.02.2002 US 358557; 20.05.2002 US 151383 P
(71) Applicant: Gateway, Inc., Poway, California 92064 (US)
(72) Inventor: Sagey, Richard W., Laguna Niguel, CA 92677 (US); Jystad, Glenn E., Dove Canyon, CA 92679 (US); Lasor, Jeffrey W., Foothill Ranch, CA 92610 (US); Smith, Kim, Dove Canyon, CA 92679 (US); Giffin, Michael J., Tustin, CA 92782 (US)
(74) Representative: Viering, Jentschura & Partner

(57) **Abstract**

The present invention is directed to a system for providing a home network console. In a first aspect the network console provides device information for physical devices within a network. The network console is non-hierarchical in as much as all the devices within the network are indicated in a single level, thus a user does not have to click through multiple levels to access devices. In a further aspect, a network console system includes agents capable of communicating device information to the network console. Inclusion of an agent in an individual device allows for dynamic updating of device information including assisting in the connection of a new device to the network, furthermore the device agent is capable of communicating device information related to supportable network activities.

## Description

### CROSS REFERENCE

The present application claims priority to United States Provisional Patent Application Number 60/358,557, entitled: Connected Home Network Console, filed on February 21, 2002, which is hereby incorporated in its entirety.

### FIELD OF THE INVENTION

The present invention relates to the field of graphical user interfaces and specifically to a substantially non-hierarchical network console capable of providing device information in a single level.

### BACKGROUND OF THE INVENTION

Present graphic user interfaces for networking may be confusing and difficult for some users. In particular inexperienced, or users not familiar with networking often have trouble establishing a network, fail to optimize the devices or may have problems comprehending the interaction of devices. For example, a new user may fail to install a new computer properly or have trouble networking.

Novice users may have difficulty determining how geographical separated devices are interrelated. Such a difficulty may occur when a printer is networked to a computer in a different location. The user may not recognize that the printer requires an associated computer to function. Moreover, novice users may become confused when devices are related in different ways, for example, the difference between a network printer and a printer accessible through a computer.

Known port-centric interface control systems typically are implemented in environments where hardware includes multiple ports for networking. Drawbacks to this type of system include the failure of such systems to provide information concerning multiple devices within the network. Further, port-centric interfaces do not indicate status information for devices within the network.

Additional interface systems, such as process control systems fail to indicate the status of all the devices and the network resources for devices. Such process control interfaces typically have limited availability, thus to access the interface users are forced to utilize a central computer to observe desired information.

Therefore, it would be desirable to provide a network console for utilization in network applications, which is capable of providing access to network devices and resources in a single interface.

### SUMMARY OF THE INVENTION

Accordingly, the present invention is directed to a graphical network console. The network console of the present invention provides an efficient, comprehendible console for accessing device information of devices within the network.

In a first aspect of the invention a network includes at least two devices. A network console is accessible to at least one of the devices. The console includes graphical representations of all devices associated with the network and device information. The network further includes an agent capable of communicating device information for one device of at least two devices. The device agent may update the device's identification, such as a name change; status information, such as connectivity to the internet; access to resources such as printers, audio/visual capabilities.

In a second aspect of the present invention a network console system includes a network console capable of accessing device information of the physical devices of the network on a single level. Device information includes device identification, relationships between devices, status and supportable network activities associated with the device.

In additional embodiments, the network console system further includes an agent for providing device information for one of the at least two devices. Individual agents are capable of communicating device information to the network console.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:

FIG. 1A is an exemplary embodiment wherein a home network console is shown;

FIG. 1B is a perspective view of the home network represented by the network console of FIG. 1A;

FIG. 2 is an exemplary embodiment wherein a supportable activity icon is selected;

FIG. 3A is an exemplary embodiment wherein a home network console is capable of indicating the addition of a network printer to the network; and

FIG. 3B is a perspective view of the home network represented by the network console of FIG. 3A.

### DETAILED DESCRIPTION OF THE INVENTION

Reference will now be made in detail to the presently preferred embodiments of the invention, examples of which are illustrated in the accompanying drawings.

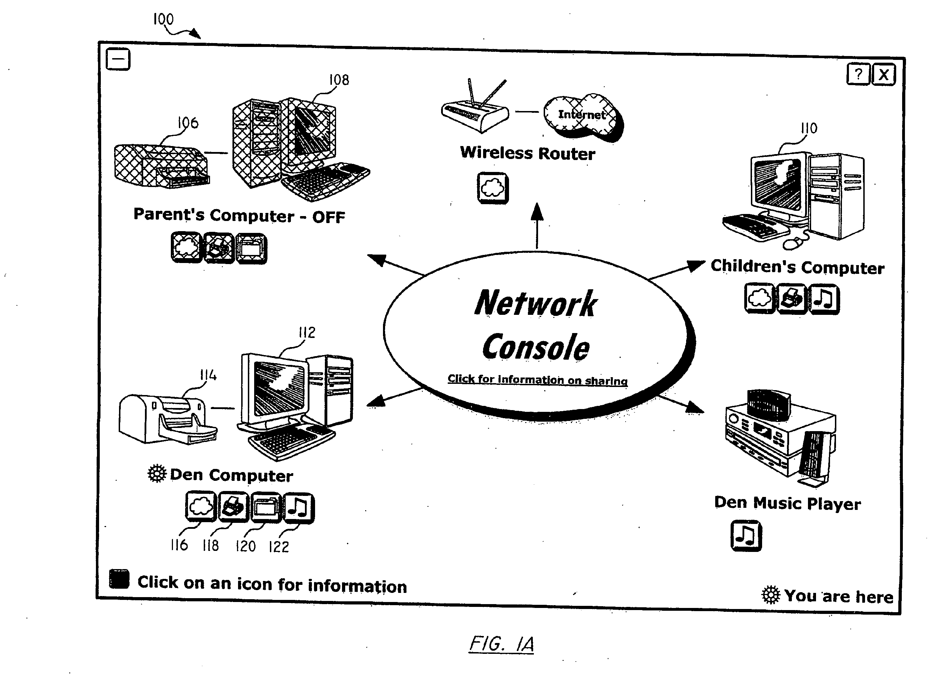

Referring generally now to FIGS. 1A through 3B, exemplary embodiments of the present invention are shown wherein a network and network console system suitable for providing a convenient, substantially non-hierarchical graphical interface console for accessing device information is discussed.

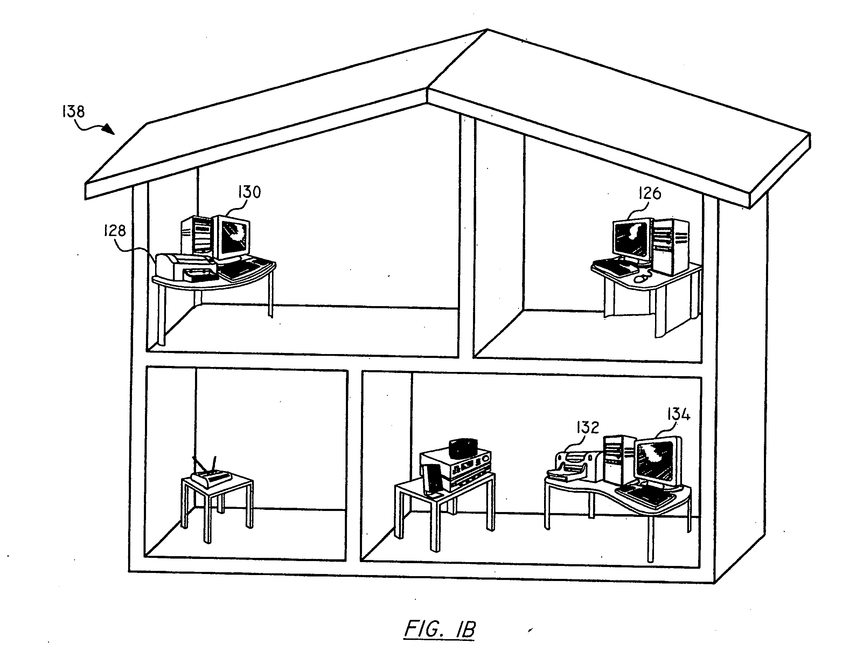

Referring to FIG. 1, a home network console 100 is shown. The network console 100 allows a user to interface with representations or icons of all devices within the network on a single interface. Network devices include those devices, which are communicatively coupled in the network but not active. Inclusion of graphical representations of all devices within the network allows users to interact with devices without having to "click" through layers of interfaces.

In the current embodiment, the network console 100 may be displayed on an output device associated with an information handling system. In other embodiments dedicated devices such as an independent touch screen device, personal digital assistant device associated with the network or the like are capable of allowing user interaction with the network console.

While the network console in FIG. 1A is directed to a home network the console is equally applicable to other networks in which users desire to view all devices in a generally non-hierarchical interface. A network of the present invention, for example the network 138 of FIG. 1B, includes at least two devices within a network. Devices include information handling systems, routers, drives, input/output devices, controllers for utilities, security systems, wireless devices linked with the network, (e.g. personal digital assistants) and the like. Preferably, the network console 100 is included as part of the device's pre-loaded configuration. In further embodiments, the network console is available as a down load, on an electronically readable medium, or the like.

As shown in FIG. 1A, the home network console 100 provides device information of the network's physical devices in a single interface. In the present example, the console 100 represents the home network 138 with all devices associated with the network represented. See generally FIG. 1B. In embodiments, displayed device information includes the relationship between devices and may be indicated by the network console, an example includes linking the parent's printer icon 106 to parent's computer icon 108 indicating the dependence of the printer 128 on parent's computer 130 additional indications of relationships include grouping associated devices together and the like. Device information may further include supportable network activities and indicator symbols such as check marks and the like.

In implementations including large numbers of devices or where large icons are desired, the network console may be scrolled through so that all devices may be accessed without resort to utilizing multiple layers. In additional embodiments, the user's device may be generally centralized and/or indicated by an icon as well.

Referring to FIGS. 1A and 1B, should a user on children's computer 126 wish to print a document on parent's printer 128 which is associated with parent's computer 130 the user may access parent's printer 128 from the network console 100, by clicking on parent's printer icon 106, observing status indicators, such as "grayed" out parent's printer icon 106 to determine that the printer is not accessible. Further, device information displayed on the console 100 indicates that the printer associated with icon 106 is dependent on parent's computer 130, represented by icon 108. User may then observe from the console 100 that the den printer 132 associated with den computer 134 is available. The user may opt to view/manipulate the den printer, such as switching the paper source of the printer by selecting the den printer icon 114.

Device information represented on the network console may be customized, such as to the make and model of a particular computer. For example, a specific icon, a library of icons or the like may be included as part of the network console system, included as a download, pre-loaded on hardware, or included on an electronically readable medium. Should a device contain an agent, discussed below, upon connection of the device to the network the pre-loaded icon representative of the device would be incorporated in the network console. Alternatively, if a device does not include a specific icon then an icon may be selected from the library. In other embodiments, users may choose an icon to represent the new device from a library, may customize the icon or the like.

The relationship of the various devices available on the network may also be indicated as well so that a map of devices is formed. In FIG. 1A, network console 100 indicates the dependence of the den printer 132 on the den computer 134, via the connection of den printer icon 114 to the den computer icon 112, thus in the case of the printer associated with parent's computer 130 the network console 100 indicates that parent's printer 128 is off.

Alternately, only portions of device relationships may be indicated by the network console. Examples where only portions of the relationship between devices may be desired include where the exact connection between resources is complex or devices are connected such that the exact connection is of reduced importance such as when devices within the network are connected via a server. In particular instances, a user of the network console may option to only have a portion of the network relationships indicated.

In further aspects a network console system includes individual device agents capable of communicating device information to the network console. Individual device agents communicate device information which may include the status of the devices, such as on/off; supportable activities, such as printing, internet availability, file sharing, audio/video capability; user information (e.g. identity of party logged on) and the like. In aspects of the invention the agent is pre-loaded on the device. In further embodiments the device agent is available as a download, provided on a electronic medium and the like. Pre-loading the device agent allows for ease of installation and automatic recognition by the network console.

When a physical device is off or the agent for the device is not communicating the network console may continue to include a representation of the device and may further indicate that the device is off, such as parent's computer 128. In the present instance the lack of communication from a particular device agent may be used to determine that the device is off. In this manner the network console is capable of maintaining data for devices which are associated with the network but are not currently powered and may include indications of device information. Active agents may communicate the information regarding the particular device's status to the network console, thus a device agent of an active device may communicate that another device on the network failed to respond and the like.

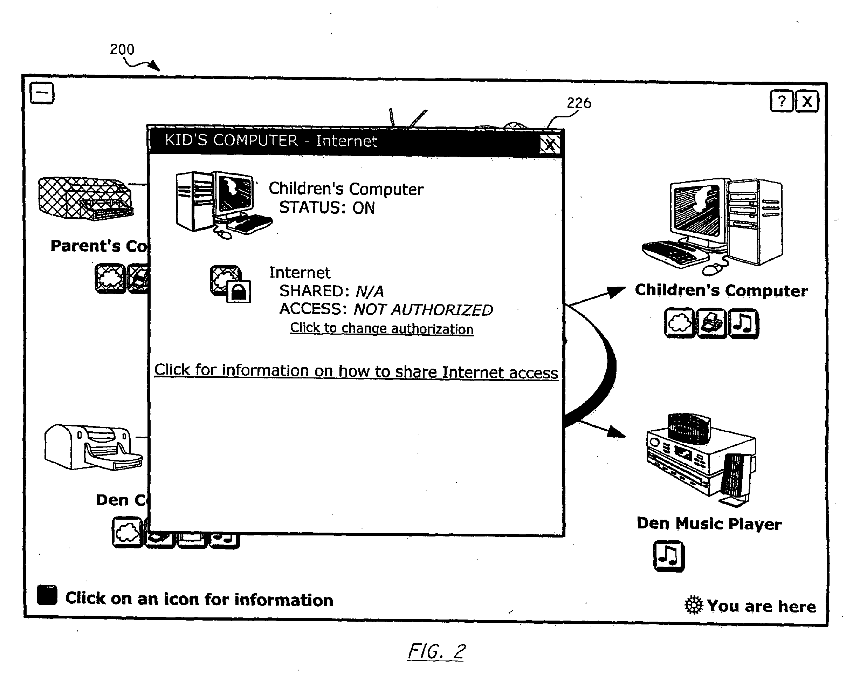

Utilizing device agents, the status of devices are indicated on the network console. Indicators include altering the icon for a particular device, utilizing symbol icons, and the like. Referring to FIG. 1A, altering icons includes "graying", icons, such as for when a device is turned off, for example the icon for parent's computer 108. Indicator symbols are capable of utilization with icons for supportable activities such as utilizing a lock symbol in conjunction with an internet icon to indicate that internet access is locked-out: Referring to FIG. 2 for example, selecting children's computer icon 110, FIG. 1, associated with children's computer 126 allows access to an overlay pop-up window 226, FIG. 2. The overlay is capable of providing additional information concerning activity status, such as the lock-out of internet access for children's computer 126.

Further in certain aspects of the present invention, dependent devices are automatically indicated as well. Referring to FIG. 1B, parent's printer 128 is dependent on parent's computer 130, thus when the status of parent's computer 130 is changed such as by turning it off then parent's printer icon 106 is also altered such as by graying parent's printer icon 106.

Referring to FIGS. 1A and 1B, in an additional aspect of the invention, the network console 100 is accessible concurrently on at least two devices capable of accessing the console. In the present embodiment device agents update information to the network console 100. For example, should a user on parent's computer wish to alter the identification of the den computer 134, FIG. 1B the device agent on parent's computer interacts to update the information, such as in real time to the network console, thus device information may be updated to allow multiple users access to the network console.

In the present aspect device information may be communicated by agents in "real time", in "near real time" and the like. As a result of this dynamic communication, device information such as device status may be updated in real time. Users of devices, such as information handling system, wireless devices within the network may swap files, update user information, share computing resources as desired.

In aspects of the present invention, at least one device includes a memory. The memory is capable of storing the network console. Utilizing at least one device with memory capable of substantially providing persistence for the network. For example, in the event of disconnect or the like the memory is capable of storing the network console including device information. In embodiments where the network console 100 is stored in the memory of more than one device the console may be stored in corresponding directories in device memory, such that redundancy is minimized.

In further aspects of the invention, the network console 100 displays device information including supportable network activities. For example, the network console 100 includes network activity icons associated with physical devices, such as the activities the device is capable of supporting. Referring to FIG 1A & 1B, or den computer supportable activities include printing function icon 118; internet functionality icon 116, file swapping function icon 120; and music functionality 122.

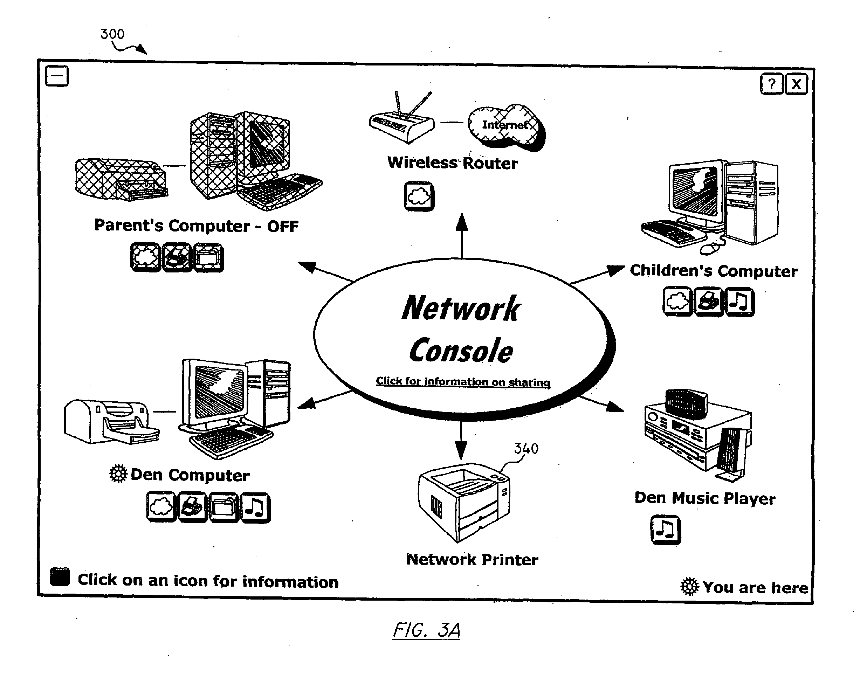

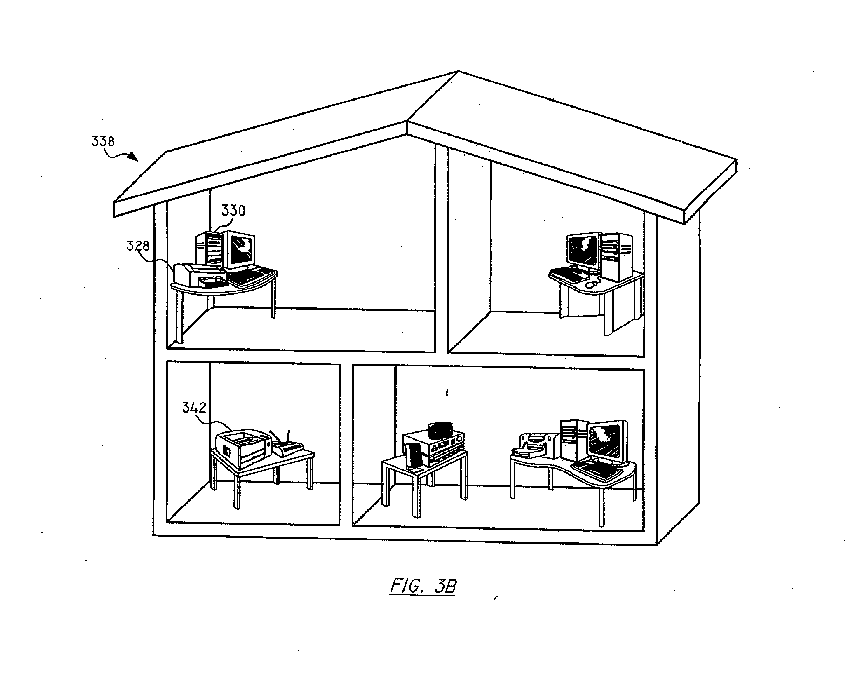

Referring to FIG. 3A and 3B should additional devices be connected to the network, when adding a new device the user may accesses the network console 300 to determine if the new device is recognized. For example, should a user wish to add a network printer 342 to the home network 338, printer (device) agent is capable of communicating to the network printer status and is additional capable of communicating the pre-loaded device icon 340 to the network console 300.

Devices associated with the network are capable of implementing protocols to expedite communication over the network. Suitable communication protocols include static internet protocol (IP), transmission control protocol/internet protocol (TCP/IP), auto internet protocol (auto IP), Ethernet, 802.11b (wireless Ethernet), dynamic host configuration protocol (DHCP), home programmable network access (HPNA) and the like.

It is believed that the CONNECTED NETWORK CONSOLE of the present invention and many of its attendant advantages will be understood by the foregoing description. It is also believed that it will be apparent that various changes may be made in the form, construction and arrangement of the components by persons skilled in the art, thereof without departing from the scope and spirit of the invention or without sacrificing all of its material advantages. In embodiments the invention can be implemented as a set of instruction capable of configuring a processor in a device to generate a network console. Until required by the processor the set of instructions may be stored in readable memory, such as in a hard disk drive, a CD-ROM, a DVD, a floppy disk, a floppy/optical disk, a memory card and the like. Further, the set of instructions may be downloaded via a network, the Internet and the like. The form herein before described being merely an explanatory embodiment thereof. It is the intention of the following claims to encompass and include such changes.

## Claims

1. A network, comprising:
at least two devices;
a network console which is accessible to at least one of the at least two devices for providing device information of each of the at least two devices to a user of the network console;
an agent capable of communicating device information from an individual device of the at least two devices to the network console;
wherein all of the at least two devices are displayed in a single interface on the network console.

2. The network of claim 1, wherein the network console is concurrently accessible to at least two devices.

3. The network of claim 1, wherein the network console is capable of indicating network activity status of the devices on the network.

4. The network of claim 1, wherein the console is capable of dynamically altering device identification when the console is concurrently accessed by at least two devices.

5. The network of claim 1, wherein at least one device of the at least two devices includes a memory capable of storing the network console.

6. The network of claim 5, wherein the network console is stored in a common directory in all memories.

7. The network of claim 1, wherein the network console includes a library of graphical representations.

8. A network console system for interfacing with physical devices within a network, comprising:
a network console for accessing device information of the physical device to a user of the network console; and
wherein the network console provides a display with all of the at least two devices in a single interface level.

9. A network console system for interfacing with physical devices within a network of claim 8, further comprising an agent capable of communicating device information from an individual device of the at least two devices to the network console.

10. A network console system for interfacing with physical devices within a network of claim 8, wherein the console is concurrently accessible to at least two devices.

11. A network console system for interfacing with physical devices within a network of claim 8, wherein the console is capable of dynamically altering device identification.

12. A network console system for interfacing with physical devices within a network of claim 8, further comprising a library of graphical representations.

13. A network console system for interfacing with physical devices within a network of claim 8, wherein the console is provided on at least one of a download, an electronically readable medium, a memory, and a memory card.

14. A network console system for interfacing with physical devices within a network of claim 8, wherein the network console indicates the status and supportable network activities of the at least two devices.

15. A home network console system for interfacing with physical devices within a network, comprising:
a network console for accessing device information of the physical device to a user of the network console; and
an agent capable of communicating device information from an individual device of the at least two devices to the network console;
wherein the network console provides a display with all of the at least two devices in a single interface level.

16. A home network console system for interfacing with physical devices within a network of claim 15, wherein the console is concurrently accessible to at least two devices capable of accessing the console.

17. A home network console system for interfacing with physical devices within a network of claim 15, wherein the console is capable of dynamically altering device identification.

18. A home network console system for interfacing with physical devices within a network of claim 15, further comprising a library of graphical representations.

19. A home network console system for interfacing with physical devices within a network of claim 15, wherein the console is provided on at least one of a download, an electronically readable medium, a memory, and a memory card.

20. A network console system for interfacing with physical devices within a network of claim 15, wherein the network console indicates the status and supportable network activities of the at least two devices.

21. A network console system for interfacing with physical devices within a network, comprising:
means for graphically interfacing, said graphic interfacing means for accessing device information of the physical device to a user of the graphic interface means; and
wherein the graphic interface means provides a display with all of the at least two devices in a single interface level.

22. A network console system for interfacing with physical devices within a network of claim 21, further comprising a device information gathering means capable of communicating device information to the graphic interface means.

23. A network console system for interfacing with physical devices within a network of claim 21, wherein the console is concurrently accessible to at least two devices.

24. A network console system for interfacing with physical devices within a network of claim 21, wherein the graphical interface means is capable of dynamically changing device identification.

25. A network console system for interfacing with physical devices within a network of claim 21, wherein the graphical interface means further includes a library of graphical representations.

26. A network console system for interfacing with physical devices within a network of claim 21, wherein the graphical interface means is provided on at least one of a download, a electronically readable medium, a memory, and a memory card.

27. A network console system for interfacing with physical devices within a network of claim 21, wherein the graphical interface means indicates the status and supportable network activities of the at least two devices.
